# EUROPEAN PATENT APPLICATION

(11) **EP 4 693 462 A1**
(43) Date of publication of application: **11.02.2026**
(21) Application number: 24761481.1
(22) Date of filing: 25.06.2024
(51) Int. Cl.: H01M 4/36, H01M 4/525, H01M 4/485

(54) **SODIUM ION BATTERY POSITIVE ELECTRODE MATERIAL AND PREPARATION METHOD THEREFOR, POSITIVE ELECTRODE SHEET, SECONDARY BATTERY, AND ELECTRICAL DEVICE**

(30) Priority: 05.06.2024 CN 202410726727
(71) Applicant: Hubei Wanrun New Energy Technology Co., Ltd., Shiyan, Hubei 442500 (CN)
(72) Inventor: PENG, Tangping, Shiyan, Hubei 442500 (CN); LV, Fei, Shiyan, Hubei 442500 (CN); LIU, Shiqi, Shiyan, Hubei 442500 (CN)
(74) Representative: Studio Torta S.p.A.
(86) International application number: PCT/CN2024/101420
(87) International publication number: WO 2025/251363

(57) **Abstract**

The present disclosure belongs to the field of cathode electrode materials for sodium-ion batteries. Provided are a sodium-ion battery cathode electrode material and a preparation method thereof, and a cathode electrode plate, a secondary battery, and an electric device. The sodium-ion battery cathode electrode material includes a core and a coating layer coating an outer surface of the core; and a material of the core is an O3-type layered oxide, and a material of the coating layer is a P2-type layered oxide. According to the sodium-ion battery cathode electrode material provided in the present disclosure, the P2-type layered oxide forms a protective layer on a surface of the O3-type layered oxide, the structural integrity and stability of the O3-type layered oxide are improved, and the P2-type coating layer can provide a rapid sodium-ion diffusion channel, such that the sodium-ion battery cathode electrode material having a core-shell structure has excellent cycling performance.

## Description

### Cross-Reference to Related Application

This application claims priority to Chinese Patent Application No. 2024107267271 filed to the China National Intellectual Property Administration on June 5, 2024 and entitled "Sodium-Ion Battery Cathode electrode Material and Preparation Method Thereof, and Cathode electrode Plate, Secondary Battery, and Electric Device", the disclosure of which is hereby incorporated by reference in its entirety.

### Technical Field

The present disclosure relates to the technical field of sodium-ion battery cathode electrode materials, and specifically to an sodium-Ion battery cathode electrode material and a preparation method thereof, and a cathode electrode plate, a secondary battery, and an electric device.

### Background

Because of abundant sodium sources and wide distribution ranges, Sodium-Ion Batteries (SIBs) have attracted a lot of attention and are considered a promising alternative to the ubiquitous lithium-ion batteries, especially for grid-scale energy storage. However, since an ionic radius of a Na ion exceeds an ionic radius of a Li ion, battery performance is affected, and preparing high-performance SIBs remains a major difficulty. Thus, it is necessary to develop a suitable cathode electrode material to meet requirements of high energy density and long service life of SIBs.

In the past few decades, Na ions are embedded in various main materials to be widely explored for the SIBs. Layered metal oxides (NaₓTMO₂; TM = Mn, Ni, Co, Fe, Cr) having significant advantages of being high in specific capacity, low in cost, and small in environmental impact have become a research hotspot. In order to distinguish various layered oxides, NaₓTMO₂ may be divided into different types (O3, P2, P3, or the like) according to positions occupied by the Na ions and a minimum number of layers of TMO₂ in each unit battery. O3-type NaₓTMO₂ (0.7 <x≤1.0), in which Na ions occupy octahedral sites, generally has high theoretical capacity and potential availability. However, due to a large energy barrier for sodium ion to detach from a crystal, the electrochemical kinetics of most O3-type materials are poor, and their phase transition proceses are complicated, leading to fast capacity fading. P2-type NaₓTMO₂ (0.44 < x≤ 0.7) has an open prismatic channel, and is fast in ionic conductivity and is high in structural stability. However, Na deficiency of a P2-type material may lead to anomalous initial coulombic efficiency.

In order to solve inherent shortcomings of P2-type and O3-type NaₓTMO₂ crystal structures, improve the charging-discharging reversibility and air/thermal stability of the layered metal oxides, improve the electrochemical kinetics thereof, and reduce charge transfer resistance to meet requirements of high capacity and long cycle life of the SIBs, the present disclosure is proposed.

### Summary

In view of the technical problems in the Background, the present disclosure provides an Sodium-Ion Battery (SIB) cathode electrode material and a preparation method thereof, and a cathode electrode plate, a secondary battery, and an electric device, so as to solve the problem that neither a P2-type layered oxide nor an O3-type layered oxide can achieve excellent electrochemical performance and thermal stability at the same time, causing the capacity and long cycle life of prepared SIBs to be difficult to meet the demand of use.

In a first aspect, an embodiment of the present disclosure provides an SIB cathode electrode material, comprising a core and a coating layer coating an outer surface of the core, wherein a material of the core is an O3-type layered oxide, and a material of the coating layer is a P2-type layered oxide.

In the technical solution of this embodiment of the present disclosure, the P2-type layered oxide is coated on an outer surface of the O3-type layered oxide to form the SIB cathode electrode material with a core-shell structure. The P2-type layered oxide forms a protective layer on the surface of the O3-type layered oxide, the structural integrity and stability of the O3-type layered oxide are improved, and the coating layer formed by the P2-type layered oxide can provide a rapid sodium-ion diffusion channel, such that the SIB cathode electrode material having a core-shell structure has excellent cycling performance.

In some embodiments, a general chemical formula of the O3-type layered oxide is NaₓTMO₂, where 0.7 < x≤1.0, TM is a transition metal element, and the transition metal element includes at least one of Ni, Mn, Fe, Ti, Co, Cr, Cu, Zn, or Mg; and/or a general chemical formula of the P2-type layered oxide is Na_{y}TMO₂, where 0.44 < y≤0.7, TM is a transition metal element, and the transition metal element includes at least one of Ni, Mn, Fe, Ti, Co, Cr, Cu, Zn, or Mg.

In these embodiments, Na ions in the O3-type layered oxide occupy octahedral sites, and generally have high theoretical capacity and potential availability, and the P2-type layered oxide has an open prismatic channel, and is fast in ionic conductivity and high in structural stability. The O3-type layered oxide is used as the core, and the P2-type layered oxide is coated on the outer surface of the O3-type layered oxide to form the coating layer. Through the mutual cooperation of the two layered oxide, the electrochemical performance and cycling stability of the SIB cathode electrode material are improved.

In some embodiments, the material of the core is NaNi_{0.5}Mn_{0.3}Ti_{0.2}O₂, and the material of the coating layer is Na_{0.67}Mn_{0.8}Mg_{0.15}Cu_{0.05}O₂.

In these embodiments, fast transmission of the Na ions and the cycling stability of a structure are taken into consideration at the same time by using NaNi_{0.5}Mn_{0.3}Ti_{0.2}O₂ as a core material and Na_{0.67}Mn_{0.8}Mg_{0.15}Cu_{0.05}O₂ as a coating layer material.

In some embodiments, D50 size of the SIB cathode electrode material is 7.5µm-11µm, D100 size is 27µm-35µm, and a thickness of the coating layer is 2nm-100nm.

In these embodiments, the SIB cathode electrode material with a proper particle size and having the coating layer with a proper thickness is more conductive to increasing a compaction density of the material, such that the SIB cathode electrode material can obtain a higher energy density and cycling stability.

In some embodiments, in the SIB cathode electrode material, the mass of the coating layer is 5%-15% of the mass of the core, and in particular, the mass of the coating layer is 8%-12% of the mass of the core, more facilitating the improvement of ionic conductivity performance and structural stability at the same time.

In a second aspect, an embodiment of the present disclosure provides a method for preparing an SIB cathode electrode material.

The preparation method includes: providing an O3-type layered oxide and a P2-type layered oxide precursor, and mixing the O3-type layered oxide and the P2-type layered oxide precursor through a dry method to obtain a mixture; and calcining the mixture to obtain the SIB cathode electrode material.

In the technical solution of this embodiment of the present disclosure, by mixing the O3-type layered oxide and the P2-type layered oxide precursor through the dry method, the P2-type layered oxide precursor is coated on the outer surface of the O3-type layered oxide and then calcined, such that in situ utilization or elimination of residual alkali on the surface of the O3-type layered oxide is realized to a certain extent, and the content of residual alkali on a surface of the prepared SIB cathode electrode material reduces, facilitating reduction in a pH value of the material, thereby avoiding gelation in a homogenization process, and improving the processing performance of the material; furthermore, the P2-type layered oxide is uniformly coated on the surface of the O3-type layered oxide, and dispersion uniformity of various elements in the coating layer is improved, thereby improving the stability of the material.

In addition, the SIB cathode electrode material provided in the embodiments of the present disclosure is simple in preparation method, can be compatible with existing layered oxide preparation process, and thus is easy to realize large-scale industrial application.

In some embodiments, a method for preparing the provided O3-type layered oxide includes: adding a sodium source and a first transition metal source to water to obtain a first slurry with a solid content being 15wt%-30wt%, sequentially performing coarse grinding and fine grinding on the first slurry to obtain a second slurry with D50 size < 3µm and D100 size < 8µm, performing spray drying on the second slurry to obtain an O3-type layered oxide precursor, and then calcining the O3-type layered oxide precursor to obtain the O3-type layered oxide.

In these embodiments, coarse grinding and fine grinding, spray drying, and calcining are sequentially performed on the first slurry formed by various raw materials, such that the O3-type layered oxide core with a proper particle size and having high theoretical capacity and potential availability is obtained through preparation. In addition, coarse grinding and fine grinding are conductive to reducing the particle sizes of particles, so as to promote full contact between insoluble particulate matters, thereby guaranteeing the distribution uniformity of cations in the cathode electrode material.

In some other embodiments, a method for preparing the provided P2-type layered oxide precursor comprises: adding a sodium source and a second transition metal source to water to obtain a third slurry with a solid content being 15wt%-30wt%, sequentially performing coarse grinding and fine grinding on the third slurry to obtain a fourth slurry with D50 size < 3µm and D100 size < 8µm, and performing spray drying on the fourth slurry to obtain the P2-type layered oxide precursor.

In these embodiments, in the process of preparing the P2-type layered oxide precursor, the third slurry with a proper solid content is prepared by various raw materials, then coarse grinding and fine grinding are sequentially performed on the third slurry to obtain the fourth slurry with a proper particle size, and finally, spray drying is then performed on the fourth slurry to obtain the P2-type layered oxide precursor. Elements in the P-type layered oxide precursor are dispersed more uniformly, and after the precursor is coated on the outer surface of the O3-type layered oxide core and calcined, the structural stability of the prepared SIB cathode electrode material is improved.

In addition, in the process of preparing the P2-type layered oxide precursor, coarse grinding and fine grinding are conductive to reducing the particle sizes of particles, so as to promote full contact between the precursor and the O3-type layered oxide, thereby guaranteeing the distribution uniformity of cations in the cathode electrode material.

In some embodiments, the sodium source includes at least one of sodium carbonate, sodium bicarbonate, sodium hydroxide, sodium acetate, sodium oxalate, or sodium citrate.

In some other embodiments, the first transition metal source and the second transition metal source each independently include at least one of an oxide, a hydroxide, a carbonate, an oxalate, an acetate, or a citrate of Ni, Mn, Fe, Ti, Mg, Cu, Al, Ca, and Co, respectively.

In some embodiments, the manner of mixing through the dry method is mechanical milling, and preferably, mechanical milling is performed by using a planetary ball mill. In particular, when a rotary speed of the planetary ball mill is 100rpm-600rpm and the time for mechanical milling is 1h-5h, the efficiency of mixing through the dry method is improved, and energy consumption is also reduced.

In some other embodiments, a calcining temperature is 700°C-950°C, and a calcining time is 5h-15h, such that the uniformly dense and internally homogeneous coating layer is formed during the calcining of the P2-type layered oxide precursor. During calcining, an atmosphere for calcining is an air atmosphere or an oxygen atmosphere to further improve the internal uniformity of the P2-type layered oxide.

In a third aspect, an embodiment of the present disclosure provides a cathode electrode plate. The cathode electrode plate includes the SIB cathode electrode material provided in the first aspect.

In this embodiment, the cathode electrode plate includes the SIB cathode electrode material, and thus has excellent structural stability and ion transmission performance.

In a fourth aspect, an embodiment of the present disclosure provides a secondary battery. The secondary battery includes the SIB cathode electrode material provided in the first aspect, or the cathode electrode plate provided in the third aspect.

In this embodiment, the secondary battery includes the cathode electrode plate, and thus has high capacity and excellent cycling performance.

In a fifth aspect, an embodiment of the present disclosure provides an electric device. The electric device includes the SIB cathode electrode material provided in the first aspect, the cathode electrode plate provided in the third aspect, or the secondary battery provided in the fourth aspect.

In this embodiment, the electric device includes the secondary battery, and thus has the advantages of being excellent in electrochemical kinetic performance and long in cycle life.

The above descriptions are only an overview of the technical solutions of the present disclosure. In order to have a clearer understanding of the technical means of the present disclosure, and implement same according to the contents of the specification and in order to make the above and other purposes, features, and advantages of the present disclosure more obvious and easier to understand, the specific embodiments of the present disclosure are specifically listed below.

### Brief Description of the Drawings

In order to more clearly explain the technical solutions of the present disclosure, a brief introduction will be given below to the drawings required to be used in the present disclosure. It is apparent that the drawings in the following descriptions are merely some implementations of the present disclosure. Other drawings can be obtained from those of ordinary skill in the art according to these drawings without any creative work.
Fig. 1 is a Scanning Electron Microscope (SEM) diagram of an SIB cathode electrode material according to Embodiment 1 of the present disclosure.
Fig. 2 is an SEM diagram of an SIB cathode electrode material according to Embodiment 2 of the present disclosure.
Fig. 3 is an SEM diagram of an SIB cathode electrode material according to Embodiment 3 of the present disclosure.
Fig. 4 is an SEM diagram of an SIB cathode electrode material according to Comparative example 1 of the present disclosure.

### Detailed Description of the Embodiments

The embodiments of the technical solutions of the present disclosure will be described in detail below in conjunction with the accompanying drawings. The following embodiments are only intended to provide a clearer explanation of the technical solutions of the present disclosure, and therefore they are only used as examples and rather than as limitations to the scope of protection of the present disclosure.

Unless otherwise defined, all technical and scientific terms as used herein have the same meanings as those commonly understood by those skilled in the technical field of the present disclosure; the terms as used herein are only intended for the purpose of describing specific embodiments rather than limiting the present disclosure; and the terms "including" and "having" in the description and claims, as well as the accompanying drawings of the present disclosure, and any variations thereof, are intended to cover non-exclusive inclusion.

In the description of embodiments of the present disclosure, the technical terms "first" and "second", etc., are only used to distinguish different objects and cannot be understood as indicating or implying relative importance or implicitly indicating the number, specific order or primary and secondary relationships of the indicated technical features. In the description of embodiments of the present disclosure, "multiple" means more than two, unless otherwise specifically defined explicitly.

Reference to "embodiments" herein means that specific features, structures, or characteristics described in combination with embodiments may be included in at least one embodiment of the present disclosure. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of the present disclosure, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of the present disclosure, the term "multiple" refers to more than two (including two), similarly, "multiple groups" refers to more than two groups (including two groups), and "multiple pieces" refers to more than two pieces (including two pieces).

In the description of the embodiments of the present disclosure, the orientation and position relationships indicated by the technical terms "center", "lengthwise", "crosswise", "length", "width", "thickness", "up", "down", "front", "back", "left", "right", "vertical", "horizontal", "top", "bottom", "inside", "outside", "clockwise", "counterclockwise", "axial", "radial" and "circumferential", etc., are based on the orientation or position relationship as shown in the accompanying drawings, it is only for the convenience of describing the embodiments of the present disclosure and simplifying the description, rather than indicating or implying that the device or element referred to thereby must have a specific orientation and be constructed and operated in a specific orientation, and thus it cannot be understood as limitations on the embodiments of the present disclosure.

In the description of the embodiments of the present disclosure, unless otherwise specified and limited, the terms "installation", "interconnection", "connection", "fixation", and the like should be understood in a broad sense, for example, it can be either fixed connection, or detachable connection, or integrated connection; it can be either mechanical connection or electrical connection; and it can be either direct connection, or indirect connection through intermediate media, or it can be the internal communication between two components or the interaction between two components. For those of ordinary skill in the art, the specific meanings of the above terms in the embodiments of the present disclosure can be understood according to the specific situations.

As analyzed in the Background of the present disclosure, because of significant advantages of being high in specific capacity, low in cost, and small in environmental impact, layered metal oxides are widely explored for the SIBs. O3-type NaₓTMO₂ (0.7 < x≤1.0) generally has high theoretical capacity and potential availability, but has the disadvantages of being poor in electrochemical kinetics, complex in phase transition process, and fast in capacity fading. P2-type NaₓTMO₂ (0.44 < x≤0.7) has an open prismatic channel, and is fast in ionic conductivity and is high in structural stability, however, Na deficiency may lead to anomalous initial coulombic efficiency.

In order to solve inherent shortcomings of a P2-type NaₓTMO₂ crystal structure and an O3-type NaₓTMO₂ crystal structure, improve the charging-discharging reversibility and air/thermal stability of the layered metal oxides, and improve the electrochemical kinetics thereof, the present disclosure provides an SIB cathode electrode material and a preparation method thereof, and a cathode electrode plate, a secondary battery, and an electric device. According to the SIB cathode electrode material provided in the present disclosure, the P2-type layered oxide is coated on an outer surface of the O3-type layered oxide to form a protective layer, such that the structural integrity and stability of the O3-type layered oxide are improved; furthermore, the P2-type coating layer can provide a rapid sodium-ion diffusion channel, such that the SIB cathode electrode material has excellent cycling performance, thereby improving the sodium ion transmission efficiency and cycling stability of the cathode electrode plate, the secondary battery, and the electric device.

The electric device provided in the embodiment of the present disclosure may be, but is not limited to, mobile phones, tablets, notebook computers, electric toys, electric tools, storage battery cars, electric automobiles, ships, spacecrafts, etc. The electric toys may include fixed or mobile electric toys, such as games consoles, electric car toys, electric boat toys, electric airplane toys, etc.; and the spacecrafts may include airplanes, rockets, space shuttles, spacecrafts, etc.

In a first aspect, an embodiment of the present disclosure provides an SIB cathode electrode material, including a core and a coating layer coating an outer surface of the core. A material of the core is an O3-type layered oxide, and a material of the coating layer is a P2-type layered oxide.

In the present disclosure, the P2-type layered oxide is coated on the surface of the O3-type layered oxide core to form the coating layer, the contact between the O3-type material and corrosive electrolyte and air may be minimized, so as to avoid the ensuing side effects, such that the stability of the cathode electrode material is improved, thereby improving the electrochemical stability and air stability of the cathode electrode material. Furthermore, the coating layer formed by the P2-type layered oxide protects the core-sensitive O3-type layered oxide, and because of the compatibility of crystalline phases of the P2-type layered oxide and the O3-type layered oxide, sodium ions are quickly transmitted, and the coating layer formed by the stable P2-type layered oxide can also prevent structural degradation caused by detachment and embedding of the sodium ions during charging and discharging, such that interlayer expansion of the O3-type layered oxide is effectively inhibited, and phase changes of a core-shell structure material in a cyclic process are relieved, thereby greatly improving the cycling performance of the SIB cathode electrode material.

Further, in some embodiments, a general chemical formula of the O3-type layered oxide is NaₓTMO₂, where 0.7 < x≤1.0 (e.g., 0.72, 0.75, 0.78, 0.80, 0.82, 8.5, 8.8, or 9.0), TM is a transition metal element, and the transition metal element includes, but is not limited to, any one or more of Ni, Mn, Fe, Ti, Co, Cr, Cu, Zn, or Mg; and/or a general chemical formula of the P2-type layered oxide is Na_{y}TMO₂, where 0.44 < y≤0.7 (e.g., 0.45, 0.48, 0.50, 0.52, 0.55, 0.58, 0.60, 0.62, 0.65, or 0.68), and the TM has the same meaning in the O3-type layered oxide. In this embodiment, Na ions in the O3-type layered oxide occupy octahedral sites, and have high theoretical capacity and potential availability, and the P2-type layered oxide has an open prismatic channel, and is fast in ionic conductivity and high in structural stability. The O3-type layered oxide is used as the core, and the P2-type layered oxide is used as the coating layer. Through the mutual cooperation of the two layered oxides, the structural stability and cycling performance of the material are improved.

Further, in some other embodiments, the material of the core is NaNi_{0.5}Mn_{0.3}Ti_{0.2}O₂, which is more conductive to increasing the capacity of the SIB cathode electrode material; and the material of the coating layer is Na_{0.67}Mn_{0.8}Mg_{0.15}Cu_{0.05}O₂, which is more conductive to improving the structural stability and sodium ion transmission efficiency of the SIB cathode electrode material.

Partial substitution of Mg²⁺ for Mn³⁺ in the material of the coating layer may increase a layer spacing, the diffusion of Na⁺ can be promoted, lattice strain caused by Na⁺ detachment is also relieved, and the stability of the layered structure is improved; and Mg²⁺ doping may relieve structural deformation or volume change in the cyclic process, inhibit irreversible phase changes, and reduce the impact of a Jahn-Teller effect from Mn³⁺, thereby further improving the stability of the structure, and improving the cycling performance of the material. In addition, a coordination effect of Mg and Cu may also improve the electrochemical activity of Cu³⁺/Cu²⁺ oxidation-reduction couples in the material, such that the detachment and embedding amount and average reaction potential of Na may be increased, thereby improving the comprehensive electrical performance of the cathode electrode material.

Further, in some embodiments, D50 size of the SIB cathode electrode material is 7.5µm-11µm (e.g., 7.5µm, 8µm, 9µm, 10µm, or 11µm), D100 size is 27µm-35µm (e.g., 27µm, 27.5µm, 28µm, 28.5µm, 29µm, 30µm, 31µm, 32µm), and a thickness of the coating layer is 2-100nm (e.g., 2nm, 5nm, 10nm, 15nm, 20nm, 50nm, 80nm, 100nm). In this embodiment, the SIB cathode electrode material is proper in particle size and is uniformly distributed, and thus is dispersed more uniformly and stably in the cathode electrode plate; and the coating layer has a proper thickness, the structural stability of the SIB cathode electrode material is improved, and initial coulombic efficiency or capacity is not affected due to a too thick coating layer.

Further, in some other embodiments, in the SIB cathode electrode material, the mass of the coating layer is 5%-15% (e.g., 5%, 8%, 9%, 10%, 11%, 12%, 15%) of the mass of the core, such that the initial coulombic efficiency is improved while the capacity of the SIB cathode electrode material is increased, and excellent structural stability is also taken into consideration.

In a second aspect, an embodiment of the present disclosure provides a method for preparing an SIB cathode electrode material. The preparation method includes: providing an O3-type layered oxide and a P2-type layered oxide precursor, and mixing the O3-type layered oxide and the P2-type layered oxide precursor through a dry method to obtain a mixture; and calcining the mixture to obtain the SIB cathode electrode material. The SIB cathode electrode material provided in the embodiments of the present disclosure is simple in preparation method, can be compatible with existing layered oxide preparation process, and thus is easy to realize large-scale industrial application.

In the embodiments of the present disclosure, by mixing the O3-type layered oxide and the P2-type layered oxide precursor through the dry method, the P2-type layered oxide precursor is coated on the outer surface of the O3-type layered oxide and then calcined, the uniform and compact coating layer formed by the P2-type layered oxide is successfully formed on the surface of the core formed by the O3-type layered oxide, the contact between the O3-type material and corrosive electrolyte and air may be minimized, so as to avoid the ensuing side effects, such that the stability of the cathode electrode material is improved, thereby improving the electrochemical stability and air stability of the cathode electrode material. Furthermore, the coating layer formed by the P2-type layered oxide protects the core-sensitive O3-type layered oxide, and because of the compatibility of crystalline phases of the P2-type layered oxide and the O3-type layered oxide, it is not conductive to fast transmission of sodium ions, and the coating layer formed by the stable P2-type layered oxide can also prevent structural degradation caused by detachment and embedding of the sodium ions during charging and discharging, such that interlayer expansion of the O3-type layered oxide is effectively inhibited, and phase changes of a core-shell structure material in a cyclic process are relieved, thereby greatly improving the cycling performance of the SIB cathode electrode material.

In addition, according to the method for preparing an SIB cathode electrode material provided in the embodiments of the present disclosure, by mixing the O3-type layered oxide and the P2-type precursor through the dry method, the P2-type layered oxide precursor is coated on the outer surface of the O3-type layered oxide and then calcined, free sodium on the surface of the O3-type layered oxide can penetrate deep into the sodium-deficient P2-type layered oxide to supplement sodium for the P2-type layered oxide, such that sodium loss and reduction in cycling performance of the P2-type layered oxide used as the coating layer during a plurality of charging and discharging processes are avoided, and excess free sodium on the surface of the O3-type layered oxide can be prevented from being in contact with moisture and carbon dioxide in air to produce sodium carbonate impurities, resulting in reduction in the capacity of the cathode electrode material; and in situ utilization or elimination of residual alkali on the surface of the O3-type layered oxide is realized to a certain extent, and the content of residual alkali on a surface of the prepared SIB cathode electrode material reduces, facilitating reduction in the pH of the material, thereby avoiding gelation in a homogenization process, and improving the processing performance of the material; furthermore, the P2-type layered oxide is uniformly coated on the surface of the O3-type layered oxide, and dispersion uniformity of various elements in the coating layer is improved, thereby improving the stability of the material.

Further, in some embodiments, the manner of mixing through the dry method is mechanical milling, and preferably, mechanical milling is performed by using a planetary ball mill, so as to further improve ball milling efficiency. Specifically, the rotary speed of the planetary ball mill is 100rpm-600rpm (e.g., 100rpm, 200rpm, 300rpm, 400rpm, 500rpm, or 600rpm), and the time for mechanical milling is 1h-5h (e.g., 1h, 2h, 3h, 4h, or 5h).

Further, in some other embodiments, a calcining temperature is 700°C -950°C (e.g., 700°C, 750°C, 800°C, 850°C, or 900°C), a calcining time is 5h-15h (e.g., 5h, 8h, 10h, 12h, or 15h), and an atmosphere for calcining is an air atmosphere or an oxygen atmosphere, such that the P2-type layered oxide precursor is coated on the surface of the O3-type layered oxide to form the uniform and compact coating layer. In addition, a process condition for calcining can also ensure that the P2-type layered oxide as the coating layer can be subjected to full ion migration and exchange with the O3-type layered oxide as the core, such that a bonding strength between the core and the coating layer is stronger, the structural stability of the obtained SIB cathode electrode material is further improved, and the compatibility between the crystalline phases of the P2-type layered oxide and the O3-type layered oxide is enhanced, thereby facilitating rapid charge transfer, and increasing a transmission rate of sodium ions. In addition, energy consumption reduces by performing calcining under the condition, thereby reducing production costs.

Further, in some embodiments, a method for preparing the provided O3-type layered oxide includes: adding a sodium source and a first transition metal source to water to obtain first slurry with a solid content being 15wt%-30wt%, sequentially performing coarse grinding and fine grinding on the first slurry to obtain second slurry with D50 < 3µm and D100 < 8µm, performing spray drying on the second slurry to obtain an O3-type layered oxide precursor, and then calcining the O3-type layered oxide precursor to obtain the O3-type layered oxide.

In these embodiments, the sodium source and the first transition metal source select different raw materials according to different specific compositions of the O3-type layered oxide. Specifically, when the O3-type layered oxide is NaNi_{0.5}Mn_{0.3}Ti_{0.2}O₂, the Na source, a Ni source, a Mn source, and a Ti source are mixed according to corresponding stoichiometric ratios and then added to water to prepare the first slurry with a corresponding solid content. For example, the solid content of the first slurry is 15wt%, 18wt%, 20wt%, 22wt%, 25wt%, 28wt%, 30wt%, or a range value consisting of any two numerical values.

The sodium source is not specifically limited, and may use one or more sodium salts commonly used in the art, such as the sodium source comprise at least one of sodium carbonate, sodium bicarbonate, sodium hydroxide, sodium acetate, sodium oxalate, and sodium citrate. The first transition metal source is also not specifically limited, and selects different transition metal sources according to different specific compositions of the O3-type layered oxide, for example, one or more of an oxide, a hydroxide, carbonate, oxalate, acetate, or citrate corresponding to Ni, Mn, Fe, Ti, Mg, Cu, Al, Ca, and Co, respectively. For example, the Ni source comprise at least one of nickel oxide (NiO), nickel oxide (Ni₂O₃), nickel hydroxide [Ni(OH)₂], nickelic hydroxide [Ni(OH)₃], nickel carbonate, or nickel oxalate; and the Mn source comprise at least one of manganese tetroxide, manganese dioxide, manganese sesquioxide, manganese monoxide, manganese carbonate, or manganese oxalate. The Ti source comprise at least one of titanium dioxide and metatitanic acid (H₂TiO₃); and the titanium source comprise at least one of titanium dioxide, or metatitanic acid (H₂TiO₃). The Mg source comprise at least one of magnesium oxide, magnesium hydroxide, or magnesium carbonate; and the copper source comprise at least one of copper oxide, copper hydroxide, or copper carbonate. Specifically, when the material of the O3-type layered oxide is NaNi_{0.5}Mn_{0.3}Ti_{0.2}O₂, the selected first transition metal source is the Ni source, the Mn source, and the Ti source.

In these embodiments, coarse grinding and fine grinding are sequentially performed on the first slurry, in an aspect, the second slurry with a proper particle size is prepared, so as to facilitate the subsequent preparation of the O3-type layered oxide with a proper particle size, and in another aspect, various elements are well mixed, such that an O3-type layered oxide precursor in which various elements are uniformly dispersed is formed during subsequent spray drying.

In addition, in the process of preparing the O3-type layered oxide, coarse grinding and fine grinding are conductive to reducing the particle sizes of particles, so as to promote full contact with insoluble particles (e.g., the P2-type layered oxide precursor), thereby guaranteeing the distribution uniformity of cations in the cathode electrode material.

Further, in these embodiments, during the preparation of the O3-type layered oxide, the calcining temperature is 850°C-950°C (e.g., 850°C, 880°C, 900°C, 920°C, or 950°C), the time is 10h -18h (e.g., 10h, 12h, 15h, or 18h), and the atmosphere for calcining is the air atmosphere or the oxygen atmosphere.

Further, in some other embodiments, a method for preparing the provided P2-type layered oxide precursor includes: adding a sodium source and a second transition metal source to water to obtain third slurry with a solid content being 15wt%-30wt%, sequentially performing coarse grinding and fine grinding on the third slurry to obtain fourth slurry with D50 < 3µm and D100 < 8µm, and performing spray drying on the fourth slurry to obtain the P2-type layered oxide precursor. In this embodiment, in the process of preparing the P2-type layered oxide precursor, coarse grinding and fine grinding are conductive to reducing the particle sizes of particles, so as to promote full contact between the precursor and the O3-type layered oxide, thereby guaranteeing the distribution uniformity of cations in the cathode electrode material.

In these embodiments, the sodium source is not specifically limited, and may use a sodium salt commonly used in the art, and the specific sodium salt is described as the above, which is not described herein again. The second transition metal source is also not specifically limited, and selects different transition metal sources according to different specific compositions of the P2-type layered oxide, and a specific substance type of the transition metal source is described as the above, which is not described herein again. Specifically, when the P2-type layered oxide is Na_{0.67}Mn_{0.8}Mg_{0.15}Cu_{0.05}O₂, the selected second transition metal source is the Mn source, the Mg source, and the Cu source.

In a third aspect, an embodiment of the present disclosure provides a cathode electrode plate. The cathode electrode plate includes the SIB cathode electrode material provided in the first aspect.

In a fourth aspect, an embodiment of the present disclosure provides a secondary battery. The secondary battery includes the SIB cathode electrode material provided in the first aspect, or the cathode electrode plate provided in the third aspect.

In a fifth aspect, an embodiment of the present disclosure provides an electric device. The electric device includes the SIB cathode electrode material provided in the first aspect, the cathode electrode plate provided in the third aspect, or the secondary battery provided in the fourth aspect.

Some specific embodiments are listed below. It should be noted that the embodiments described below are exemplary and are only intended to explain the present disclosure, which cannot be understood as limitations to the present disclosure. If no specific technology or conditions are indicated in the examples, the technology or conditions described in the literature in the art or the product specification shall be followed. The reagents or instruments used of which the manufacturers are not indicated are conventional products that are commercially available.

### Embodiment 1

This embodiment provided an SIB cathode electrode material, including a core and a coating layer coating an outer surface of the core. A material of the core was an O3-type layered oxide (NaNi_{0.5}Mn_{0.}Ti_{0.2}O₂), a material of the coating layer was a P2-type layered oxide (Na_{0.67}Mn_{0.8}Mg_{0.8}Cu_{0.05}O₂), where D50=8µm±0.5µm and D100=28µm±0.5µm, and the mass of the P2-type layered oxide was 5% of the mass of the O3-type layered oxide.

The SIB cathode electrode material was prepared according to the following steps.
(1) Sodium carbonate, nickel oxide, manganese tetroxide, and titanium oxide were mixed according to a required stoichiometric ratio and added to water to obtain first slurry with a solid content of 20%, coarse grinding and fine grinding were sequentially performed on the first slurry to obtain second slurry with D50 < 3µm and D100 < 8µm, spray drying was performed on the second slurry to obtain an O3-type nickel-manganese-based layered oxide precursor, and the O3-type nickel-manganese-based layered oxide precursor was calcined (a temperature was heated to 900°C from room temperature at 5°C /min, and was held for 13h) to obtain an O3-type nickel-manganese-based layered oxide (NaNi_{0.5}Mn_{0.3}Ti_{0.2}O₂).
(2) Raw materials of sodium carbonate, manganese tetroxide, magnesium oxide, and copper oxide for preparing the P2-type layered oxide (Na_{0.67}Mn_{0.8}Mg_{0.15}Cu_{0.05}O₂) were mixed according to a required stoichiometric ratio and added to the water to obtain third slurry with a solid content of 15%, coarse grinding and fine grinding were sequentially performed on the third slurry to obtain fourth slurry with D50 < 3µm and D100 < 8µm, and spray drying was performed on the fourth slurry to obtain a P2-type layered oxide precursor.
(3) The P2-type layered oxide precursor and the O3-type nickel-manganese-based layered oxide were mixed according to a mass ratio of 5:100, and were ground for 1h by using a planetary ball mill, so as to obtain a mixture.
(4) The mixture in step (3) was calcined (a temperature was heated to 800°C from room temperature at 5°C/min, and was held for 10h), and then crushed and sieved, so as to obtain the SIB cathode electrode material having a core-shell structure.

### Embodiment 2

This embodiment provided an SIB cathode electrode material, including a core and a coating layer coating an outer surface of the core. A material of the core was an O3-type layered oxide (NaNi_{0.5}Mn_{0.}Ti_{0.2}O₂), a material of the coating layer was a P2-type layered oxide (Na_{0.67}Mn_{0.8}Mg_{0.15}Cu_{0.05}O₂), where D50=8.5µm±0.5µm and D100=27.5µm±0.5µm, and the mass of the P2-type layered oxide was 10% of the mass of the O3-type layered oxide.

The SIB cathode electrode material was prepared according to the following steps.
(1) Sodium carbonate, nickel oxide, manganese tetroxide, and titanium oxide were mixed according to a required stoichiometric ratio and added to water to obtain first slurry with a solid content of 20%, coarse grinding and fine grinding were sequentially performed on the first slurry to obtain second slurry with D50 < 3µm and D100 < 8µm, spray drying was performed on the second slurry to obtain an O3-type nickel-manganese-based layered oxide precursor, and the O3-type nickel-manganese-based layered oxide precursor was calcined (a temperature was heated to 900°C from room temperature at 5°C/min, and was held for 15h) to obtain an O3-type nickel-manganese-based layered oxide (NaNi_{0.5}Mn_{0.3}Ti_{0.2}O₂).
(2) Raw materials of sodium carbonate, manganese tetroxide, magnesium oxide, and copper oxide for preparing the P2-type layered oxide (Na_{0.67}Mn_{0.8}Mg_{0.15}Cu_{0.05}O₂) were mixed according to a required stoichiometric ratio and added to the water to obtain third slurry with a solid content of 15%, coarse grinding and fine grinding were sequentially performed on the third slurry to obtain fourth slurry with D50 < 3µm and D100 < 8µm, and spray drying was performed on the fourth slurry to obtain a P2-type layered oxide precursor.
(3) The P2-type layered oxide precursor and the O3-type nickel-manganese-based layered oxide were mixed according to a mass ratio of 10:100, and were ground for 1h by using a planetary ball mill, so as to obtain a mixture.
(4) The mixture in step (3) was calcined (a temperature was heated to 850°C from room temperature at 5°C/min, and was held for 15h), and then crushed and sieved, so as to obtain the SIB cathode electrode material having a core-shell structure.

### Embodiment 3

This embodiment provided an SIB cathode electrode material, including a core and a coating layer coating an outer surface of the core. A material of the core was an O3-type layered oxide (NaNi_{0.5}Mn_{0.}Ti_{0.2}O₂), a material of the coating layer was a P2-type layered oxide (Na_{0.67}Mn_{0.8}Mg_{0.15}Cu_{0.05}O₂), where D50=8.3µm±0.5µm and D100=28.2µm±0.5µm, and the mass of the P2-type layered oxide was 15% of the mass of the O3-type layered oxide.

The SIB cathode electrode material was prepared according to the following steps.
(1) Sodium carbonate, nickel oxide, manganese tetroxide, and titanium oxide were mixed according to a required stoichiometric ratio and added to water to obtain first slurry with a solid content of 20%, coarse grinding and fine grinding were sequentially performed on the first slurry to obtain second slurry with D50 < 3µm and D100 < 8µm, spray drying was performed on the second slurry to obtain an O3-type nickel-manganese-based layered oxide precursor, and the O3-type nickel-manganese-based layered oxide precursor was calcined (a temperature was heated to 900°C from room temperature at 5°C/min, and was held for 17h) to obtain an O3-type nickel-manganese-based layered oxide (NaNi_{0.5}Mn_{0.3}Ti_{0.2}O₂).
(2) Raw materials of sodium carbonate, manganese tetroxide, magnesium oxide, and copper oxide for preparing the P2-type layered oxide (Na_{0.67}Mn_{0.8}Mg_{0.15}Cu_{0.05}O₂) were mixed according to a required stoichiometric ratio and added to the water to obtain third slurry with a solid content of 15%, coarse grinding and fine grinding were sequentially performed on the third slurry to obtain fourth slurry with D50 < 3µm and D100 < 8µm, and spray drying was performed on the fourth slurry to obtain a P2-type layered oxide precursor.
(3) The P2-type layered oxide precursor and the O3-type nickel-manganese-based layered oxide were mixed according to a mass ratio of 15:100, and were ground for 1h by using a planetary ball mill, so as to obtain a mixture.
(4) The mixture in step (3) was calcined (a temperature was heated to 800°C from room temperature at 5°C/min, and was held for 10h), and then crushed and sieved, so as to obtain the SIB cathode electrode material having a core-shell structure.

### Embodiment 4

Differences between this embodiment and Embodiment 2 lied in that, the material of the coating layer was the P2-type layered oxide (Na_{0.67}Mn_{0.8}Mg_{0.15}Cu_{0.05}O₂), and the mass of the P2-type layered oxide was 8% of the O3-type layered oxide. Furthermore, in step (3) of the preparation process, the P2-type layered oxide precursor and the O3-type nickel-manganese-based layered oxide were mixed according to a mass ratio of 8:100.

### Embodiment 5

Differences between this embodiment and Embodiment 2 lied in that, the material of the coating layer was the P2-type layered oxide (Na_{0.67}Mn_{0.8}Mg_{0.15}Cu_{0.05}O₂), and the mass of the P2-type layered oxide was 12% of the O3-type layered oxide. Furthermore, in step (3) of the preparation process, the P2-type layered oxide precursor and the O3-type nickel-manganese-based layered oxide were mixed according to a mass ratio of 12:100.

### Embodiment 6

Differences between this embodiment and Embodiment 2 lied in that, the material of the coating layer was the P2-type layered oxide (Na_{0.67}Mn_{0.8}Mg_{0.15}Cu_{0.05}O₂), and the mass of the P2-type layered oxide was 3% of the O3-type layered oxide. Furthermore, in step (3) of the preparation process, the P2-type layered oxide precursor and the O3-type nickel-manganese-based layered oxide were mixed according to a mass ratio of 3:100.

### Embodiment 7

Differences between this embodiment and Embodiment 2 lied in that, the material of the coating layer was the P2-type layered oxide (Na_{0.67}Mn_{0.8}Mg_{0.15}Cu_{0.05}O₂), and the mass of the P2-type layered oxide was 20% of the O3-type layered oxide. Furthermore, in step (3) of the preparation process, the P2-type layered oxide precursor and the O3-type nickel-manganese-based layered oxide were mixed according to a mass ratio of 20:100.

### Embodiment 8

Differences between this embodiment and Embodiment 2 lied in that, the material of the coating layer was the P2-type layered oxide (Na_{0.67}Mn_{0.8}Mg_{0.2}O₂), and in step (2) of the preparation process, the types and use amount of raw materials were adjusted according to the elemental composition and stoichiometric ratios of the P2-type layered oxide (Na_{0.67}Mn_{0.8}Mg_{0.2}O₂).

### Embodiment 9

Differences between this embodiment and Embodiment 2 lied in that, the material of the coating layer was the P2-type layered oxide (Na_{0.67}Mn_{0.8}Cu_{0.2}O₂), and in step (2) of the preparation process, the types and use amount of raw materials were adjusted according to the elemental composition and stoichiometric ratios of the P2-type layered oxide (Na_{0.67}Mn_{0.8}Mg_{0.2}O₂).

### Embodiment 10

Differences between this embodiment and Embodiment 2 lied in that, the material of the core was the O3-type layered oxide (NaNi_{0.5}Mn_{0.5}O₂), and in step (1) of the preparation process, the types and use amount of raw materials were adjusted according to the elemental composition and stoichiometric ratios of the P2-type layered oxide (Na_{0.67}Mn_{0.8}Mg_{0.2}O₂).

### Embodiment 11

Differences between this embodiment and Embodiment 2 lied in that, the material of the core was the O3-type layered oxide (NaNi_{0.4}Fe_{0.2}Mn_{0.4}O₂), and in step (1) of the preparation process, the types and use amount of raw materials were adjusted according to the elemental composition and stoichiometric ratios of the P2-type layered oxide (Na_{0.67}Mn_{0.8}Mg_{0.2}O₂).

### Comparative example 1

This comparative example provided a SIB cathode electrode material, which was the O3-type nickel-manganese-based layered oxide (NaNi_{0.5}Mn_{0.3}Ti_{0.2}O₂) obtained in step (1) in Embodiment 1.

### Comparative example 2

This comparative example provided a SIB cathode electrode material, which was prepared according to the following steps.
(1) Sodium carbonate, nickel oxide, manganese tetroxide, and titanium oxide were mixed according to a required stoichiometric ratio and added to water to obtain first slurry with a solid content of 20%, coarse grinding and fine grinding were sequentially performed on the first slurry to obtain second slurry with D50 < 3µm and D100 < 8µm, spray drying was performed on the second slurry to obtain an O3-type nickel-manganese-based layered oxide precursor, and the O3-type nickel-manganese-based layered oxide precursor was calcined (a temperature was heated to 900°C from room temperature at 5°C/min, and was held for 15h) to obtain an O3-type nickel-manganese-based layered oxide (NaNi_{0.5}Mn_{0.3}Ti_{0.2}O₂).
(2) Raw materials of sodium carbonate, manganese tetroxide, magnesium oxide, and copper oxide for preparing the P2-type layered oxide (Na_{0.67}Mn_{0.8}Mg_{0.15}Cu_{0.05}O₂) were mixed according to a stoichiometric ratio, and then were mixed with the O3-type nickel-manganese-based layered oxide to sequentially perform coarse grinding and fine grinding, so as to obtain a mixture precursor in which the P2-type layered oxide coated the O3-type nickel-manganese-based layered oxide, and a ratio of the total mass of the P2-type layered oxide precursor prepared according to the stoichiometric ratio to the mass of the O3-type nickel-manganese-based layered oxide was 10:100.
(3) The mixture in step (1) was calcined (a temperature was heated to 850°C from room temperature at 5°C/min, and was held for 15h), and then crushed and sieved, so as to obtain the SIB cathode electrode material having a core-shell structure.

### Comparative example 3

This comparative example provided a SIB cathode electrode material, which was prepared according to the following steps.
(1) Sodium carbonate, nickel oxide, manganese tetroxide, and titanium oxide were mixed according to a required stoichiometric ratio and added to water to obtain first slurry with a solid content of 20%, coarse grinding and fine grinding were sequentially performed on the first slurry to obtain second slurry with D50 < 3µm and D100 < 8µm, spray drying was performed on the second slurry to obtain an O3-type nickel-manganese-based layered oxide precursor.
(2) Raw materials of sodium carbonate, manganese tetroxide, magnesium oxide, and copper oxide for preparing the P2-type layered oxide (Na_{0.67}Mn_{0.8}Mg_{0.15}Cu_{0.05}O₂) were mixed according to a required stoichiometric ratio and added to the water to obtain third slurry with a solid content of 15%, coarse grinding and fine grinding were sequentially performed on the third slurry to obtain fourth slurry with D50 < 3µm and D100 < 8µm, and spray drying was performed on the fourth slurry to obtain a P2-type layered oxide precursor.
(3) The P2-type layered oxide precursor and the O3-type nickel-manganese-based layered oxide precursor were mixed according to a mass ratio of 10:100, and were ground for 1h by using a planetary ball mill, so as to obtain a mixture.
(4) The mixture in step (3) was calcined (a temperature was heated to 850°C from room temperature at 5°C/min, and was held for 15h), and then crushed and sieved, so as to obtain the SIB cathode electrode material having a core-shell structure.

### (I) Performance indicator detection

Particle size D50 and D100, compaction density, specific surface area, and surface pH testing were respectively performed on the SIB cathode electrode material provided in Embodiment 1 and Comparative example 1, and results were shown in Table 1 below.
(1) A method for detecting particle sizes D50 and D100 referred to a GB/T 19077 particle size analysis laser diffraction method.
(2) A method for detecting the compaction density referred to GB/T 24533 powder compaction density determination.
(3) A method for detecting the specific surface area referred to GB/T 19587 determination of the specific surface area of solids by gas adsorption using the BET method.
(4) A method for detecting the pH of a surface of a material referred to GB/T 9724 chemical reagent general rule for the determination of pH.

**Table 1**

| | D50 (µm) | D100 (µm) | Compaction density (g/cm²) | Specific surface area (m²/g) | Surface pH |
|---|---|---|---|---|---|
| Embodiment 1 | 8.0±0.5 | 28.0±0.5 | 3.20±0.05 | 0.44±0.03 | 12.0-12.4 |
| Embodiment 2 | 8.5±0.5 | 27.5±0.5 | 3.23±0.05 | 0.35±0.03 | 12.0-12.3 |
| Embodiment 3 | 8.3±0.5 | 28.2±0.5 | 3.25±0.05 | 0.33±0.03 | 12.0-12.4 |
| Embodiment 4 | 8.3±0.5 | 28.1±0.5 | 3.21±0.05 | 0.42±0.03 | 12.0-12.4 |
| Embodiment 5 | 8.4±0.5 | 27.5±0.5 | 3.24±0.05 | 0.34±0.03 | 12.0-12.3 |
| Embodiment 6 | 8.5±0.5 | 28.5±0.5 | 3.17±0.05 | 0.46±0.03 | 12.3-12.8 |
| Embodiment 7 | 8.5±0.5 | 27.3±0.5 | 3.28±0.05 | 0.31±0.03 | 12.0-12.3 |
| Embodiment 8 | 8.0±0.5 | 28.5±0.5 | 3.08±0.05 | 0.34±0.03 | 12.0-12.4 |
| Embodiment 9 | 8.4±0.5 | 28.3±0.5 | 3.27±0.05 | 0.34±0.03 | 12.0-12.4 |
| Embodiment 10 | 8.0±0.5 | 27.4±0.5 | 3.22±0.05 | 0.33±0.03 | 12.0-12.4 |
| Embodiment 11 | 8.2±0.5 | 28.0±0.5 | 3.21±0.05 | 0.34±0.03 | 12.0-12.5 |
| Comparative example 1 | 10.0±0.5 | 33.5±0.5 | 3.15±0.05 | 0.68±0.03 | 13.6-13.8 |
| Comparative example 2 | 9.0±0.5 | 32.3±0.5 | 3.21±0.05 | 0.63±0.03 | 12.1-12.5 |
| Comparative example 3 | 10.5±0.5 | 34.5±0.5 | 3.22±0.05 | 0.74±0.03 | 12.5-13.5 |

From Table 1, it might be seen that the particle size of the SIB cathode electrode material provided in Comparative example 1 was large; and if the SIB cathode electrode material was directly used, it needed to be further crushed by devices such as a jet mill to reduce the particle size. The particle sizes of SIB cathode electrode materials provided in Embodiments 1-3 were small, which benefited from the grinding action of the planetary ball mill in step (3), and particle sizes were crushed, facilitating the controlling of the particle size of the final sintered material, simplifying a crushing step of the calcined material or shortening a crushing time, and thus saving energy consumption and reducing costs.

From Table 1, it might also be seen that, according to the cathode electrode materials provided in Embodiments 1-11, the P2-type layered oxide coated was used as the protective layer, such that the compaction density of the cathode electrode material was increased, and an SIB with a higher energy density was obtained.

In addition, the P2-type layered oxide of a Na_{0.67}Mn_{0.8}Mg_{0.15}Cu_{0.05}O₂ type was used as the coating layer, and an ion migration and melting effect was better when the calcining temperature was 700°C-950°C; the bonding between the P2-type layered oxide and the core formed by the O3-type layered oxide was stable; the doping of Cu facilitated the increasing of a compaction density of a final product; and the compaction density of the final obtained SIB cathode material increased with the increasing of a doping amount of Cu. Therefore, when Cu was not doped in the coated P2-type layered oxide, the compaction density of the final obtained SIB cathode material was low.

By comparing the Embodiments and Comparative examples in the specific surface areas, it might be seen that, according to the SIB cathode electrode materials provided in Embodiments 1-11, the P2-type layered oxide coated was used as the protective layer, the specific surface area was lower, pores were less, and the water absorption of the SIB cathode electrode material could be further reduced, thereby improving the processing performance of the SIB cathode electrode material.

By comparing the Embodiments and Comparative examples in the surface pH of the material, it might be seen that the surface pH of the SIB cathode electrode materials provided in Embodiments 1-5 and 7-11 was between 12.0 and 12.5, and gelation during homogenization was not easy to occur, such that the processing performance of the SIB cathode electrode material was improved. On the contrary, the pH value of the SIB cathode electrode material provided in Comparative example 1 was higher than 13.5, which was highly alkaline, and gelation was easy to occur during homogenization of an electrode plate, leading to failure of electrode plate preparation, and poor processing performance of the material.

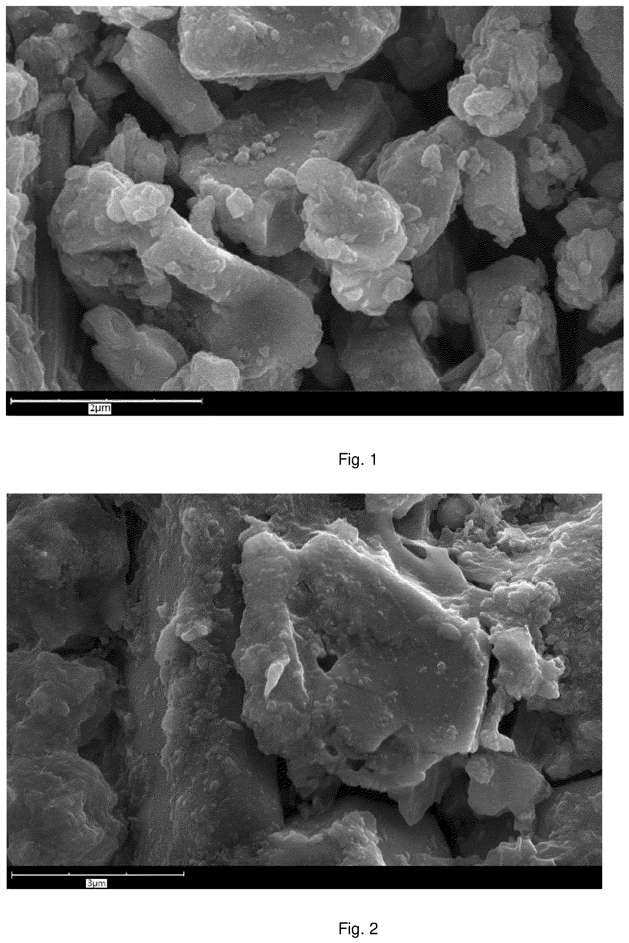

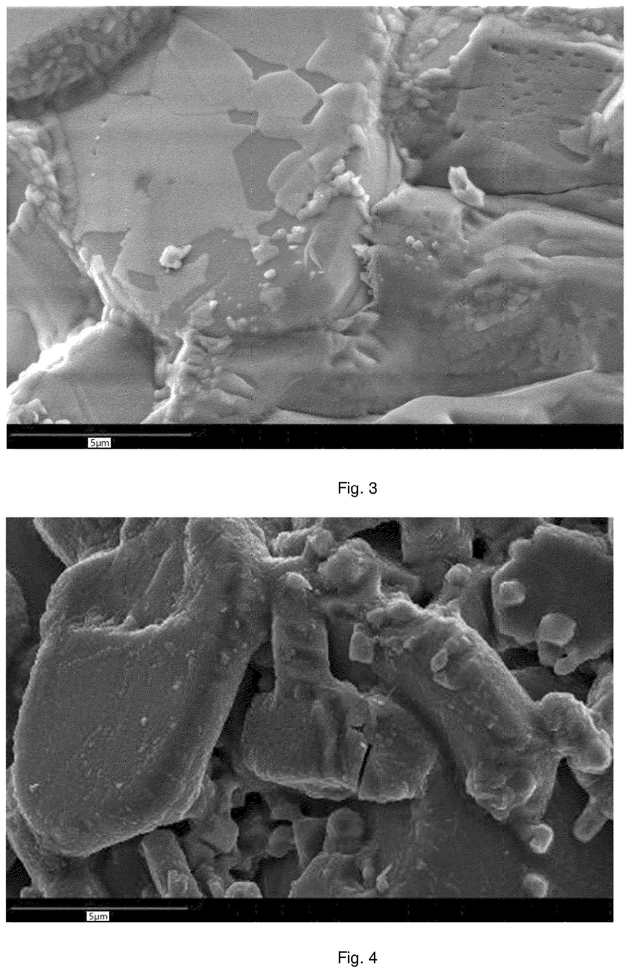

In addition, the morphology of the SIB cathode electrode materials provided in Embodiments 1-3 and Comparative example 1 was observed by using an SEM; an SEM diagram of the SIB cathode electrode material provided in Embodiment 1 was shown in Fig. 1; an SEM diagram of the SIB cathode electrode material provided in Embodiment 2 was shown in Fig. 2; an SEM diagram of the SIB cathode electrode material provided in Embodiment 3 was shown in Fig. 3; and an SEM diagram of the SIB cathode electrode material provided in Comparative example 1 was shown in Fig. 4. From comparisons of Figs. 1-3 and Fig. 4, it might be seen that the surface of a laminated structure of the uncoated O3-type layered oxide provided in Comparative example 1 was smooth, and the surfaces of laminated structures of the SIB cathode electrode materials having core-shell structures provided in Embodiments 1-3 were roughened, showing visible fine-grained bumps or obvious layered coating layers, and thus showing that the P2-type layered oxide was successfully coated on the surface of the O3-type layered oxide.

### (II) Electrochemical performance detection

The SIB cathode electrode materials provided in Embodiments 1-11 and Comparative examples 1-3 were respectively assembled into SIBs, the charging specific capacity, discharging specific capacity, and efficiency of the SIBs at 0.1C, 0.2C, 0.5C, and 1C, as well as the charging specific capacity and discharging specific capacity of the 100th cycle at 1C, were respectively tested, the charging specific capacity and discharging specific capacity tested at 0.1C were respectively the first charging specific capacity and the first discharging specific capacity, and results were shown in Table 2 below.

The SIBs provided in Embodiments 1-11 and Comparative examples 1-3 were prepared according to the following steps.
(1) Preparation of the cathode electrode plate: the SIB cathode electrode material were respectively obtained from Embodiments 1-11 and Comparative examples 1-3, acetylene black, and polyvinylidene fluoride (PVDF) were mixed according to a mass ratio of 85:10:5; according to a solid-liquid mass ratio of 65:35, a solvent N-methyl-2-pyrrolidone (NMP) was added; uniform electrode slurry was formed through stirring and mixing; then the electrode slurry was uniformly coated on aluminum foil; and after vacuum drying, a circular electrode plate was cut and then transferred to a glove box for later use.
(2) Battery assembly: metal sodium was used as a counter electrode, glass fiber was used as a separator, a solute of electrolyte was sodium perchlorate, a solvent of the electrolyte was propylene carbonate, ethylene carbonate, and fluoroethylene carbonate (a volume ratio being 1:1:0.05), the concentration of the sodium perchlorate in the electrolyte was 1mol/L, a CR2032 button battery was assembled, and the entire assembly process was performed in a glove box filled with argon. The button battery was allowed to stand for 6h and then used for subsequent electrochemical performance testing.
(3) A constant current charging and discharging mode was used, charging and discharging testing was performed under a current density of 0.1C, a charging cutoff voltage was 4.0V, and a discharging cutoff voltage was 2.0V. After the charging and discharging testing was performed at 0.1C-0.2C-0.5C, respectively, 100 charging and discharging cycles were performed at the current density of 1C, and capacity retention rates (%) of 100 cycles at 1C might be obtained by dividing a discharging specific capacity of the 103rd test by a discharging specific capacity of the 4th test.

In addition, the cathode electrode materials provided in Embodiments 1-11 and Comparative examples 1-3 were exposed in an air environment, ambient humidity was 55%, the conditions were maintained for 3 days, then the SIBs were respectively constituted, the discharging specific capacities of the SIBs at 0.1C were respectively tested, a ratio of the discharging specific capacities to initial discharging specific capacities of the corresponding SIBs was calculated, and results were shown in Table 2 below.

**Table 2**

| | | 0.1C | 0.2C | 0.5C | 1C (initial) | 1C (100th cycle) | Capacity retention rates of 100 cycles | 3 days of exposure | Retention rate of 3 days of exposure |
|---|---|---|---|---|---|---|---|---|---|
| Embodiment 1 | Charging specific capacity (mAh/g) | 112.00 | 101.90 | 95.50 | 88.20 | 72.40 | 82.09% | / | / |
| | Discharging specific capacity (mAh/g) | 101.10 | 96.80 | 89.70 | 83.30 | 72.00 | 86.43% | 94.02 | 93% |
| | Efficiency | 90.25% | 95.06% | 93.99% | 94.48% | 99.44% | / | / | / |
| Embodiment 2 | Charging specific capacity (mAh/g) | 112.50 | 101.90 | 95.30 | 87.80 | 75.00 | 85.42% | / | / |
| | Discharging specific capacity (mAh/g) | 99.40 | 95.20 | 88.40 | 82.30 | 73.300 | 89.06% | 94.43 | 95.00% |
| | Efficiency | 88.03% | 93.40% | 92.84% | 93.74% | 97.70% | / | / | / |
| Embodiment 3 | Charging specific capacity (mAh/g) | 111.10 | 99.90 | 94.6 | 87.20 | 74.2 | 85.09% | / | / |
| | Discharging specific capacity (mAh/g) | 98.20 | 94.50 | 88.20 | 81.80 | 72.10 | 88.14% | 93.12 | 94.83% |
| | Efficiency | 88.39% | 94.59% | 93.23% | 93.81% | 97.17% | / | / | / |
| Embodiment 4 | Charging specific capacity (mAh/g) | 112.70 | 101.20 | 94.50 | 88.50 | 73.93 | 83.54% | / | / |
| | Discharging specific capacity (mAh/g) | 100.10 | 96.20 | 89.50 | 82.30 | 72.31 | 87.86% | 94.19 | 94.10% |
| | Efficiency | 88.82% | 95.06% | 94.71% | 92.99% | 97.80% | / | / | / |
| Embodiment 5 | Charging specific capacity (mAh/g) | 112.20 | 101.60 | 94.30 | 88.10 | 75.15 | 85.30% | / | / |
| | Discharging specific capacity (mAh/g) | 99.80 | 95.40 | 88.70 | 82.50 | 73.43 | 89.01% | 94.94 | 95.13% |
| | Efficiency | 88.95% | 93.90% | 94.06% | 93.64% | 97.72% | / | / | / |
| Embodiment 6 | Charging specific capacity (mAh/g) | 112.23 | 104.90 | 97.60 | 92.20 | 74.40 | 80.69% | / | / |
| | Discharging specific capacity (mAh/g) | 99.78 | 100.10 | 90.70 | 86.30 | 72.00 | 83.43% | 90.80 | 91.0% |
| | Efficiency | 88.91% | 95.42% | 92.93% | 93.60% | 96.77% | / | / | / |
| Embodiment 7 | Charging specific capacity (mAh/g) | 106.88 | 97.83 | 91.87 | 85.84 | 70.2 | 83.14% | / | / |
| | Discharging specific capacity (mAh/g) | 96.95 | 92.76 | 86.79 | 79.48 | 68.99 | 88.21% | 93.41 | 94.40% |
| | Efficiency | 90.71% | 94.82% | 94.47% | 92.59% | 98.28% | / | / | / |
| Embodiment 8 | Charging specific capacity (mAh/g) | 108.53 | 99.13 | 93.98 | 85.67 | 71.92 | 83.95% | / | / |
| | Discharging specific capacity (mAh/g) | 96.65 | 93.06 | 84.38 | 80.10 | 70.88 | 88.49% | 90.99 | 94.14% |
| | Efficiency | 89.05% | 93.88% | 89.79% | 93.50% | 98.55% | / | / | / |
| Embodiment 9 | Charging specific capacity (mAh/g) | 110.00 | 100.12 | 96.2 | 86.79 | 73.59 | 84.79% | / | / |
| | Discharging specific capacity (mAh/g) | 97.90 | 94.00 | 88.00 | 81.21 | 71.14 | 87.60% | 91.54 | 93.50% |
| | Efficiency | 89.00% | 93.89% | 91.48% | 93.57% | 96.67% | / | / | / |
| Embodiment 10 | Charging specific capacity (mAh/g) | 109.80 | 105.30 | 97.32 | 87.91 | 74.35 | 84.58% | / | / |
| | Discharging specific capacity (mAh/g) | 98.45 | 92.87 | 88.41 | 81.99 | 72.85 | 88.85% | 89.16 | 90.56% |
| | Efficiency | 89.66% | 88.20% | 90.84% | 93.27% | 97.98% | / | / | / |
| Embodiment 11 | Charging specific capacity (mAh/g) | 110.34 | 99.72 | 93.56 | 85.95 | 74.77 | 86.99% | / | / |
| | Discharging specific capacity (mAh/g) | 98.96 | 94.10 | 86.69 | 80.99 | 72.32 | 89.29% | 91.86 | 92.83% |
| | Efficiency | 89.69% | 94.36% | 92.66% | 94.23% | 96.72% | / | / | / |
| Comparative example 1 | Charging specific capacity (mAh/g) | 112.70 | 106.30 | 101.40 | 94.00 | 75.50 | 80.32% | / | / |
| | Discharging specific capacity (mAh/g) | 104.40 | 100.6 | 94.20 | 87.70 | 71.90 | 81.98% | 89.78 | 86.00% |
| | Efficiency | 92.61% | 94.68% | 92.90% | 93.34% | 95.16% | / | / | / |
| Comparative example 2 | Charging specific capacity (mAh/g) | 111.59 | 102.00 | 94.65 | 87.80 | 68.30 | 77.79% | / | / |
| | Discharging specific capacity (mAh/g) | 98.66 | 94.90 | 88.30 | 84.30 | 64.30 | 76.28% | 73.8 | 74.80% |
| | Efficiency | 88.41% | 93.04% | 93.29% | 96.01% | 94.14% | / | / | / |
| Comparative example 3 | Charging specific capacity (mAh/g) | 100.78 | 91.79 | 88.59 | 80.34 | 56.11 | 69.84% | / | / |
| | Discharging specific capacity (mAh/g) | 90.49 | 87.89 | 83.91 | 77.12 | 49.83 | 64.61% | 56.92 | 62.90% |
| | Efficiency | 89.79% | 95.75% | 94.72% | 95.99% | 88.81% | / | / | / |

Generally, the coating of the sodium-deficient P2-type layered oxide slightly reduced the 0.1C specific capacity of the final finished product; when the mass fraction of the coating layers was less, the impact was small, and when the number of the coating layers was more, the impact on the capacity was large; and at the same time, when there were more coating layers (exceeding 15%), and excess P2-type layered oxides formed sodium-deficient impure phases among O3-type layered oxide particles, which reduced the capacity of the finished product, and had no obvious benefits to the air stability of the finished product. Therefore, there was some fluctuation in the capacity in Embodiments 1-6, but the comparison needed to be analyzed in conjunction with the specific capacity retention rates of the 3 days of exposure.

From Table 2, it might be seen that, it might be learned, by comparing Embodiment 1 with Comparative example 1, that the first charging specific capacity of the SIB prepared by the SIB cathode electrode material provided in Embodiment 1 slightly increased, the first discharging specific capacity was reduced by 3mA·h/g, and the discharging specific capacity retention rate of 100 cycles at 1C was increased by about 5%; it might be learned, by comparing Embodiment 2 with Comparative example 1, that the first charging specific capacity of the SIB prepared by the SIB cathode electrode material provided in Embodiment 2 was almost constant, the first discharging specific capacity was reduced by 5mA·h/g, and the discharging specific capacity retention rate of 100 cycles at 1C was increased by about 8%; and it might be learned, by comparing Embodiment 3 with Comparative example 1, that the first charging specific capacity of the SIB prepared by the SIB cathode electrode material provided in Embodiment 3 was almost constant, the first discharging specific capacity was reduced by 6.2mA·h/g, and the discharging specific capacity retention rate of 100 cycles at 1C was increased by about 8%.

Further, from Table 2, it might also be seen that the discharging specific capacity of the SIB prepared by the cathode electrode material provided in Comparative example 1 after 3 days of exposure was only 86% of the first discharging specific capacity, the discharging specific capacity of the SIB prepared by the SIB cathode electrode material provided in Embodiment 1 after 3 days of exposure was 93% of the first discharging specific capacity, the discharging specific capacity of the SIB prepared by the SIB cathode electrode material provided in Embodiment 2 after 3 days of exposure was 95% of the first discharging specific capacity, the discharging specific capacity of the SIB prepared by the SIB cathode electrode material provided in Embodiment 3 after 3 days of exposure was 95.3% of the first discharging specific capacity, and air stability was significantly improved.

By comparing Embodiment 2 with Comparative example 2, in Embodiment 2, the P2-type layered oxide precursor in which elements were uniformly mixed was used for coating, facilitating ion migration and formation of a P2-type crystalline phase during sintering, such that the elements of the P2-type layered oxide were distributed more uniformly, a crystalline phase structure is more stable, and impure phases after coating were less; and in Comparative example 2, when raw materials preparing the P2-type layered oxide were directly used to mix with and coat the O3-type layered oxide, there might be a problem of uneven distribution of the raw materials, resulting in the generation of impure phases, such as mixed with low-capacity sodium manganate and sodium nickelate in the finished product, leading to low capacity and poor cycling performance of the finally-obtained finished product.

It is to be noted that the present disclosure is not limited to the aforementioned embodiments. The above embodiments are only illustrative, and embodiments that have the substantially same composition and play the same acting role as the technical idea within the scope of technical solution of the present disclosure are all included in the technical scope of the present disclosure. In addition, other embodiments constructed by applying various variations that can be thought of by those skilled in the art and by combining some constituent elements of the embodiments without departing from the scope of the main idea of the present disclosure are also included in the scope of the present disclosure.

## Claims

1. A Sodium-Ion Battery cathode electrode material, comprising a core and a coating layer coating an outer surface of the core, wherein a material of the core is an O3-type layered oxide, and a material of the coating layer is a P2-type layered oxide.

2. The Sodium-Ion Battery cathode electrode material according to claim 1, wherein a general chemical formula of the O3-type layered oxide is NaₓTMO₂, wherein 0.7<x≤1.0, TM is a transition metal element, and the transition metal element comprises at least one of Ni, Mn, Fe, Ti, Co, Cr, Cu, Zn, or Mg.
and/or, a general chemical formula of the P2-type layered oxide is Na_{y}TMO₂, wherein 0.44 <y≤0.7, TM is a transition metal element, and the transition metal element comprises at least one of Ni, Mn, Fe, Ti, Co, Cr, Cu, Zn, or Mg.

3. The Sodium-Ion Battery cathode electrode material according to claim 1, wherein the material of the core is NaNi_{0.5}Mn_{0.3}Ti_{0.2}O₂, and the material of the coating layer is Na_{0.67}Mn_{0.8}Mg_{0.15}Cu_{0.05}O₂.

4. The Sodium-Ion Battery cathode electrode material according to any one of claims 1 to 3, wherein D50 size of the Sodium-Ion Battery cathode electrode material is 7.5µm-11µm, D100 size is 27µm-35µm, and a thickness of the coating layer is 2nm-100nm; and
preferably, the mass of the coating layer is 5%-15% of the mass of the core, preferably 8%-12%.

5. A method for preparing the Sodium-Ion Battery cathode electrode material according to any one of claims 1 to 4, comprising:
providing an O3-type layered oxide and a P2-type layered oxide precursor, and mixing the O3-type layered oxide and the P2-type layered oxide precursor through a dry method to obtain a mixture; and
calcining the mixture to obtain the Sodium-Ion Battery cathode electrode material.

6. The method for preparing the Sodium-Ion Battery cathode electrode material according to claim 5, wherein a method for preparing the provided O3-type layered oxide comprises: adding a sodium source and a first transition metal source to water to obtain a first slurry with a solid content being 15wt%-30wt%, sequentially performing coarse grinding and fine grinding on the first slurry to obtain a second slurry with D50 size<3µm and D100 size<8µm, performing spray drying on the second slurry to obtain an O3-type layered oxide precursor, and then calcining the O3-type layered oxide precursor to obtain the O3-type layered oxide;
and/or, a method for preparing the provided P2-type layered oxide precursor comprises: adding a sodium source and a second transition metal source to water to obtain a third slurry with a solid content being 15wt%-30wt%, sequentially performing coarse grinding and fine grinding on the third slurry to obtain a fourth slurry with D50 size<3µm and D100 size<8µm, and performing spray drying on the fourth slurry to obtain the P2-type layered oxide precursor.

7. The method for preparing the Sodium-Ion Battery cathode electrode material according to claim 5, wherein the sodium source comprises at least one of sodium carbonate, sodium bicarbonate, sodium hydroxide, sodium acetate, sodium oxalate, or sodium citrate;
and/or the first transition metal source and the second transition metal source each independently comprise at least one of an oxide, a hydroxide, a carbonate, an oxalate, an acetate, or a citrate of Ni, Mn, Fe, Ti, Mg, Cu, Al, Ca, and Co, respectively.

8. A cathode electrode plate, comprising the Sodium-Ion Battery cathode electrode material according to any one of claims 1 to 4.

9. A secondary battery, comprising the Sodium-Ion Battery cathode electrode material according to any one of claims 1 to 4, or the cathode electrode plate according to claim 8.

10. An electric device, comprising the Sodium-Ion Battery cathode electrode material according to any one of claims 1 to 4, or the cathode electrode plate according to claim 8, or the secondary battery according to claim 9.
